# EUROPEAN PATENT SPECIFICATION

(11) **EP 4 255 940 B1**
(45) Date of publication and mention of the grant of the patent: **29.10.2025**
(21) Application number: 21815485.4
(22) Date of filing: 18.11.2021
(51) Int. Cl.: C08F 2/00, C08F 2/01, C08F 210/06, B01J 8/24, B01J 19/24

(54) **PROCESS FOR THE PRODUCTION OF POLYOLEFIN COMPOSITIONS IN A MULTISTAGE PROCESS**
VERFAHREN ZUR HERSTELLUNG VON POLYOLEFINZUSAMMENSETZUNGEN IN EINEM MEHRSTUFIGEN PROZESS
PROCÉDÉ DE PRODUCTION DE COMPOSITIONS DE POLYOLÉFINE DANS UN PROCÉDÉ À PHASES MULTIPLES

(30) Priority: 01.12.2020 EP 20211077
(43) Date of publication of application: 11.10.2023
(73) Proprietor: Borealis GmbH, 1020 Vienna (AT)
(72) Inventor: DAS, Shital, 06101 Porvoo (FI); ALASTALO, Kauno, 06101 Porvoo (FI); KUPAREVA, Antonina, 06101 Porvoo (FI); BRUCKBAUER, Stefan, 84489 Burghausen (DE); KORTEJÄRVI, Henrik, 06101 Porvoo (FI); ELOVAINIO, Erno, 06101 Porvoo (FI)
(74) Representative: Kador & Partner Part mbB
(86) International application number: PCT/EP2021/082225
(87) International publication number: WO 2022/117358

(56) References cited:
- EP-A1- 1 415 999
- EP-A1- 3 480 220

## Description

### Background

The present invention relates to a process and an apparatus for the polymerization of alpha-olefin polymers in a multistage process. In particular, the present invention concerns a process and an apparatus for continuous polymerization of alpha-olefin monomers like ethylene and/or propylene and other monomers, wherein an alpha-olefin monomer is polymerised in a continuously operated multistage polymerisation sequence involving at least two gas phase reactors.

The polymerization of alpha-olefin polymers in a multistage process involving a slurry phase polymerization and one or more gas phase reactors is well known. Gas phase reactors are commonly used for the polymerization of alpha-olefins such as ethylene and propylene as they allow relative high flexibility in polymer design and the use of various catalyst systems. A common gas phase reactor variant is a fluidized bed reactor.

Such multistage processes, as developed by Borealis (known as BORSTAR^{®} technology) are described e.g. in patent literature, such as in EP 0 887 379, WO 92/12182 WO 2004/000899, WO 2004/111095, WO 99/24478, WO 99/24479 or in WO 00/68315.

Heterophasic propylene copolymers also denoted impact propylene copolymers are also well known in the art. Heterophasic propylene copolymers are composed of two phases, i.e. a highly crystalline matrix phase and an amorphous elastomer phase dispersed therein. These two phases are either mixed by in-situ blending via reactors coupled in series or by mechanical blending of two components produced separately, whereby in-situ blending is generally preferred due to the better mixing quality. In addition to that it was recognized in the art that further improved properties can be obtained by using a bimodal or trimodal matrix phase and/or a bimodal elastomer phase. When combined with desirable in-situ blending there is the need for multi reactors coupled in series. As a further separate option the use of solution polymerization with two or more reactor trains configured in parallel has been described. However, the separation, i.e. workup of the solvent and catalyst in solution polymerization introduces undesirable complexity.

WO 2013/041507 A1 discloses a process for the production of a heterophasic polypropylene whereby a triple stage sequential reactor configuration loop - gas phase reactor 1 - gas phase reactor 2 is used for the production of the matrix phase with the elastomer phase being incorporated by mechanical blending. Due to mechanical blending higher amounts of higher than 20 wt.-% can be achieved.

EP 2 586 823 A1 discloses a process for the production of a heterophasic polypropylene whereby a quadruple stage sequential reactor configuration loop - gas phase reactor 1 - gas phase reactor 2 - gas phase reactor 3 is applied with the matrix phase being produced in the first three reactors, i.e. loop - gas phase reactor 1 - gas phase reactor 2 and the elastomer phase being produced in gas phase reactor 3. Again the amount of elastomer as prepared in the final reactor is rather limited which is partially compensated by mechanical blending of small amounts of impact modifiers.

EP 2 174 980 A1 discloses a process for the production of a heterophasic polypropylene whereby a triple stage sequential reactor configuration loop - gas phase reactor 1 - gas phase reactor 2 is used with the matrix phase being produced in the loop reactor only and the elastomer phase being produced in gas phase reactors 1 and 2. However, such sequence does not provide bimodality in the matrix.

WO 2004/039847 A1 relates to a process and an apparatus for continuous polymerisation of olefin monomers in a cascade of polymerisation reactors. According to the process, an olefin monomer is polymerised first in slurry phase in an inert hydrocarbon diluent in at least one loop reactor and then, subsequently, in gas phase in at least one gas phase reactor. According to the invention, a polymer slurry is continuously withdrawn from the loop reactor and optionally concentrated. The concentrated slurry is conducted to a high pressure flash unit in order to remove the remaining fluid phase, and fed to the gas phase reactor. With this process, it is possible to produce bimodal polyethylene with good properties. The operation of the process is stable because of continuous operation conditions.

Prior art triple or quadruple stage sequential reactor configurations have certain limitations. In a first aspect a pressure decrease enabling easy transfer of the polymer intermediate powder from one reactor to the following reactor would be desirable. In a second and a more important aspect, the catalyst productivity declines over the reactors coupled in series. Addition of a second catalyst into one or more reactors following the first reactor is conceivable but usually leads to high complexity due to need for deactivation of the catalyst used in the preceding reactor. Further introduction of catalyst at the final reactor usually will increase the risk of catalyst flushing. In a third and also important aspect, the powder obtained as for example from preceding reactors displaces undesirably high volume in a subsequent reactor. In a forth and also important aspect, the dissimilarity of the individual fractions as produced in the individual reactors is somewhat limited. For example, the hydrogen feed for modifying the melt flow rate and dependent thereon the molecular weight results in certain limitations and/or additional measures to be taken such as degassing steps.

The disadvantages of existing triple or quadruple stage sequential reactor configurations lead to certain constraints in the polymerization process and insofar also in the polymer products which can be obtained.

According to the standard operating procedures and fluid flow dynamics inside the reactor, polymer slurry produced in a slurry reactor is concentrated at the lower bottom surface of the slurry reactor. Usually, the slurry is withdrawn from that surface and may further be settled in an outlet tube. Thus, the solid content in the polymer slurry is increased, based on the reactor residence time and catalyst performance. However, without additional equipment it is not possible to increase the solid concentration further. Additionally if the catalyst performance with in the reactor is not as expected, much diluted slurry is transferred to the downstream gas phase reactor. This means higher amount of unreacted monomer are transferred to the gas phase reactor. This leads to inefficient operation of recovery of monomer, resulting in higher amount to flaring (burning of monomers).

The current operation procedures therefore desire to reduce the residence time of the catalyst in the slurry reactor by flashing the slurry from loop in lower solid concentration to a 1^{st} gas phase reactor. Catalyst with lower residence time in slurry reactors will increase the productivity in gas phase reactors. Nevertheless, higher amount of unreacted monomer are entrained with the slurry phase to gas phase reactor(s) and finally to the recovery section. At higher production cycles, current design capacity of the recovery unit will not be sufficient to separate and recycle the monomer back to the reactor. This will result in high monomer loss to flare. Thus, the design capacity of current gas phase reactors and the increase in polymer throughput are still a problem in the existing polymerization systems. Moreover, it is still difficult to design a polymerization system enabling to tailor flexible polymer design at higher production rate.

Therefore, it is an object of the present invention to improve existing sequential multistage polyolefin polymerization processes and to provide a process for producing alpha-olefin polymers in the presence of a polymerization catalyst in a continuously operated multistage polymerisation sequence, where the residence time of catalyst in a slurry reactor is reduced while higher production rates, higher productivity and flexible polymer design can be achieved.

### Summary of the Invention

In order to achieve the above objects the present inventors have found a process for producing alpha-olefin polymers in the presence of a polymerization catalyst in a continuously operated multistage polymerisation sequence, comprising the steps of:
(a) polymerizing an alpha-olefin monomer and optionally one or more alpha-olefin co-monomers in a slurry reactor in the presence of a hydrocarbon diluent or liquid monomer in a slurry phase to obtain an alpha-olefin polymer, the slurry phase having a first concentration of solids,
(b) continuously withdrawing from the slurry reactor a polymer slurry containing polymer and a fluid phase, ,
(c) concentrating at least a part of the polymer slurry by removing a part of the fluid phase to provide a 1^{st} product stream comprising a concentrated slurry having a second solids concentration, which is higher than the first solids concentration, and a 2^{nd} product stream mainly comprising the fluid phase,
(d) polymerizing said 1^{st} product stream in the presence of alpha-olefin monomers and optionally one or more alpha-olefin co-monomers in a first gas phase reactor (GPR1) arranged downstream of said slurry reactor to obtain a 1^{st} alpha-olefin product stream,
(e) polymerizing a 3^{rd} product stream, withdrawn from said slurry reactor, in the presence of alpha-olefin monomers and optionally one or more alpha-olefin co-monomers in a second gas phase reactor (GPR2) to obtain a 2^{nd} alpha-olefin product stream.

In the process according to the invention, said 3^{rd} product stream may preferably comprise a concentrated slurry having a solids concentration lower than the second solids concentration of said 1^{st} product stream.

The above process may alternatively comprise the steps of:
(a) polymerizing an alpha-olefin monomer and optionally one or more alpha-olefin co-monomers in a slurry reactor in the presence of a hydrocarbon diluent or liquid monomer in a slurry phase to obtain an alpha-olefin polymer, the slurry phase having a first concentration of solids,
(b) continuously withdrawing from the slurry reactor a polymer slurry (1) containing polymer and a fluid phase,
(c) concentrating at least a part of the polymer slurry (1) by removing a part of the fluid phase to provide a 1^{st} product stream (2) comprising a concentrated slurry having a second solids concentration, which is higher than the first solids concentration, and a 2^{nd} product stream (3) mainly comprising the fluid phase,
(d') splitting the 1^{st} product stream withdrawn from the slurry reactor into a first secondary product stream (2a) and a second secondary product stream (2b), wherein the 1^{st} product stream comprises said concentrated slurry,
(e') polymerizing said first secondary product stream (2a) in the presence of alpha-olefin monomers and optionally one or more alpha-olefin co-monomers in a first gas phase reactor (GPR1) arranged downstream of said slurry reactor to obtain a 1^{st} alpha-olefin product stream (4a), and
(f) polymerizing said second secondary product stream (2b) in the presence of alpha-olefin monomers and optionally one or more alpha-olefin co-monomers in a second gas phase reactor (GPR2) arranged downstream of said slurry reactor, and arranged in parallel to the first gas phase reactor (GPR1), to obtain a 2^{nd} alpha-olefin product stream (4b).

Preferably, in this embodiment of the invention, a 3^{rd} product stream (6), withdrawn from said slurry reactor is polymerized, in the presence of alpha-olefin monomers and optionally one or more alpha-olefin co-monomers in said second gas phase reactor (GPR2) to obtain said 2^{nd} alpha-olefin product stream (4b).

Preferably, in this embodiment of the invention, the solids concentration in the 3^{rd} product stream (6) is lower than the solids concentration in the 1^{st} product stream (2) comprises said concentrated slurry.

Preferably, in the above processes according to the present invention, step (c) is conducted in a hydrocyclone. Thus, the slurry may be concentrated to provide an underflow, which comprises the concentrated slurry, and an overflow, which is rich in hydrocarbon(s). The overflow may preferably be recycled to the slurry reactor. According to a preferred mode of the above process, the 1^{st} product stream comprising the concentrated slurry is withdrawn from the slurry reactor via a separation vessel, preferably via a hydrocyclone, whereby the concentration of solids at the outlet is higher than the concentration of solids in the slurry reactor.

According to a preferred embodiment of the above process of the present invention, the 1^{st} alpha-olefin product stream obtained in the above step (d) or step (e') and the 2^{nd} alpha-olefin product stream obtained in the above step (e) or step (f) may be combined to form a joined alpha-olefin product stream (5).

In order to achieve the above objects the present inventors have further found a polymerization system according to the invention for producing alpha-olefin polymers in the presence of a polymerization catalyst in a continuously operated multistage polymerisation sequence, comprising:
(A) a slurry reactor for polymerizing an alpha-olefin monomer and optionally one or more alpha-olefin co-monomers in the presence of a hydrocarbon diluent or liquid monomer in a slurry phase to obtain an alpha-olefin polymer, the slurry phase having a first solids concentration, the slurry reactor having at least one outlet allowing continuous withdrawal of a polymer slurry,
(B) a separation vessel for concentrating at least a part of the polymer slurry withdrawn from the slurry reactor by removing a part of the fluid phase to provide a 1^{st} product stream (2)comprising a concentrated slurry having a second solids concentration, which is higher than the first solids concentration, and a 2^{nd} product stream (3) mainly comprising the fluid phase, the separation vessel having an overflow and an underflow,
(C) a first gas phase reactor (GPR1) arranged downstream of the slurry reactor for polymerizing the 1^{st} product stream (2) in the presence of alpha-olefin monomers and optionally one or more alpha-olefin co-monomers, thus obtaining a 1^{st} alpha-olefin product stream (4a) exiting said first gas phase reactor (GPR1), and
(D) a second gas phase reactor (GPR2) arranged downstream of the slurry reactor and arranged in parallel to the first gas phase reactor (GPR1) for polymerizing a 3^{rd} product stream (6), withdrawn from the slurry reactor in the presence of alpha-olefin monomers and optionally one or more alpha-olefin co-monomers, thus obtaining a 2^{nd} alpha-olefin product stream (4b) exiting said second gas phase reactor (GPR2).

The polymerization system according to the invention may alternatively comprise:
(A) a slurry reactor for polymerizing an alpha-olefin monomer and optionally one or more alpha-olefin co-monomers in the presence of a hydrocarbon diluent or liquid monomer in a slurry phase to obtain an alpha-olefin polymer, the slurry phase having a first solids concentration, the slurry reactor having at least one outlet allowing continuous withdrawal of a polymer slurry,
(B) a separation vessel for concentrating at least a part of the polymer slurry withdrawn from the slurry reactor by removing a part of the fluid phase to provide a 1^{st} product stream (2) comprising a concentrated slurry having a second solids concentration, which is higher than the first solids concentration, and a 2^{nd} product stream (3) mainly comprising the fluid phase, the separation vessel having an overflow and an underflow, and
(G) respective transfer lines for splitting the 1^{st} product stream (2) withdrawn from the slurry reactor into a first secondary product stream (2a) and a second secondary product stream (2b), wherein the 1^{st} product stream comprises said concentrated slurry, wherein said first secondary product stream (2a) is polymerized in the presence of alpha-olefin monomers and optionally one or more alpha-olefin co-monomers in a first gas phase reactor (GPR1), arranged downstream of said slurry reactor to obtain a 1^{st} alpha-olefin product stream (4a), and
said second secondary product stream (2b) is polymerized in the presence of alpha-olefin monomers and optionally one or more alpha-olefin co-monomers in a second gas phase reactor (GPR2) arranged downstream of said slurry reactor, and arranged in parallel to the first gas phase reactor (GPR1) to obtain a 2^{nd} alpha-olefin product stream (4b).

Preferably, the present embodiment of the polymerization system of the invention further comprises:
(D') a transfer line for withdrawing from the slurry reactor a 3^{rd} product stream (6) and transferring it to said second gas phase reactor (GPR2), for polymerizing said 3^{rd} product stream (6) in the presence of alpha-olefin monomers and optionally one or more alpha-olefin co-monomers, thus obtaining said 2^{nd} alpha-olefin product stream (4b) exiting said second gas phase reactor (GPR2).

The process and system of the present invention provide important advantages. Thus, it is possible to produce multimodal alpha-olefin polymer compositions, preferably heterophasic or random polypropylene composition with advanced properties. There is no harmful carryover of reactants from the first polymerisation stage to the second and/or third polymerisation stage. Expensive overdesign of process elements can be avoided. The operation of the process is stable because of continuous operation. The time of transitions and start-up can be reduced. An increase in polymer throughput (production rate) can be achieved and monomer loss can be reduced. Moreover, operating two gas phase reactors in parallel allows to produce two different polymer in each reactor simultaneously. By combining these two independent streams in a subsequent extrusion step unique products with tailored product properties may be produced.

### Brief Description of the Figures

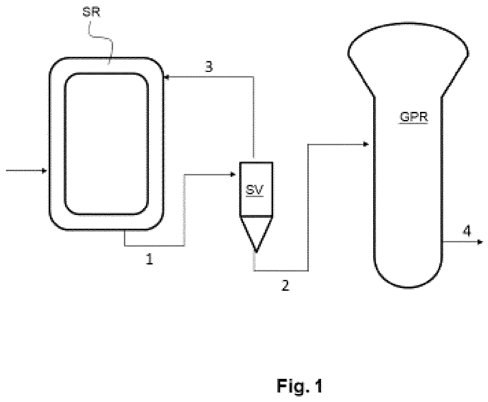

Fig. 1 is a schematic drawing of a reactor configuration of the prior art.
Fig. 2 is a schematic drawing of a reactor configuration according to a first embodiment of the present invention.
Fig. 3 is a schematic drawing of a reactor configuration according to a second embodiment of the present invention.
Fig. 4 is a schematic drawing of a further reactor configuration according to a third embodiment of the present invention.

### Detailed Description of the invention

An alpha-olefin homo-or copolymer may be produced in a continuously operated multistage polymerization process comprising at least two gas phase reactors (GPR1) and (GPR2). The polymerization apparatus may preferably comprise a pre-polymerization reactor (PR), a first polymerization reactor (R1) and a second polymerization reactor (R2), a third polymerization reactor (R3) and optionally a fourth polymerization reactor (R4). The term "polymerization reactor" shall indicate that the main polymerization takes place.

At least two polymerization reactors are gas phase reactors (GPR). More preferably, the second polymerization reactor (R2), the third polymerization reactor (R3) and the optional fourth polymerization reactor (R4) are gas phase reactors (GPRs), i.e. a first gas phase reactor (GPR1) and a second gas phase reactor (GPR2) and a optionally a third gas phase reactor (GPR3). A gas phase reactor (GPR) according to this invention is preferably a fluidized bed reactor, a fast fluidized bed reactor or a settled bed reactor or any combination thereof.

The polymerization in the gas phase reactors is preceded by a slurry polymerization in a slurry reactor, preferably a loop reactor. In the slurry reactor (SR) an alpha-olefin monomer and optionally one or more alpha-olefin co-monomers is produced in the presence of a hydrocarbon diluent or liquid monomer in a slurry phase to obtain an alpha-olefin polymer. The slurry phase has a first concentration of solids.

Accordingly, the slurry reactor (SR) may be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

It is preferred that the operating temperature in the first polymerization reactor (R1) is in the range of 62 to 85°C, more preferably in the range of 65 to 82°C, still more preferably in the range of 67 to 80°C.

In the slurry reactor, alpha-olefin monomers, preferably propylene may be homopolymerised or copolymerised with at least one C₂ and C₄ to C₁₀ alpha-olefin. The polymerisation takes place in an inert hydrocarbon diluent or liquid monomer, preferably a C₃ to C₅ hydrocarbon diluent, more preferably in propane or isobutane diluent.

Suitable catalysts that can be used to polymerize the alpha-olefin monomers are, e.g., Ziegler-Natta catalysts, single-site catalysts, multi-site catalysts containing one or more single-site catalyst components, or combinations or mixtures of these.

The alpha-olefin polymer is continuously withdrawn from the slurry reactor in a polymer slurry containing polymer and a fluid phase, further containing hydrocarbons and optionally hydrogen. The term "alpha-olefin polymer is continuously withdrawn from the slurry reactor" encompasses the alternative of withdrawing a polymer slurry with or without a concentration step before introducing said slurry to any further downstream polymerization reactor.

At least a part of the polymer slurry may preferably be concentrated by removing a part of the fluid phase to provide a 1^{st} product stream and a 2^{nd} product stream mainly comprising the fluid phase. The 1^{st} product stream comprises a concentrated slurry. The concentrated slurry has a (second) solids concentration, which is higher than the (first) solids concentration of the slurry phase circulating in the slurry reactor. The concentration step for concentrating at least a part of the polymer slurry withdrawn from the slurry reactor may be conducted in a separation vessel, preferably a hydrocyclone.

The concentration step is preferably conducted in a hydrocyclone. Hydrocyclones are known and described e.g. in WO 2004/039847 A1. A hydrocyclone typically produces two mass streams: one on the bottom (*underflow*) and one at the top (*overflow*). The underflow is generally the denser or coarser fraction having a higher solids concentration than the overflow, while the overflow mainly comprises the fluid phase including the major part of the hydrocarbons. Stable operating conditions of the hydrocyclone may be reached by recycling a part of the slurry from the bottom (underflow) of the hydrocyclone to the slurry reactor. By use of such a concentration step, the solid concentration in the concentrated slurry may be increased up to 55 wt.%, preferably 60 wt.%, more preferably up to 65 wt.%, based on the total mass of the slurry.

The 1^{st} product stream comprising said concentrated slurry is introduced into a first gas phase reactor (GPR1), arranged downstream of said slurry reactor. The 1^{st} product stream comprising the major part of the alpha-olefin polymer produced in the slurry reactor is polymerized in the presence of alpha-olefin monomers and optionally one or more alpha-olefin co-monomers and optionally hydrogen in said first gas phase reactor (GPR1) to obtain a 1^{st} alpha-olefin product stream.

In the GPR1 the following conditions are preferably adjusted:

| GPR1 | |
|---|---|
| Temperature, ^{O}C | 70-95 |
| Pressure, barg | 18-24 |
| Monomer | Propylene |
| Comonomers | Ethylene |
| Split % | 40-60 |

The above conditions may be varied as occasion demands. Specifically, not only propylene may be polymerized but other alpha-olefins such as ethylene, 1-butene, 1-hexene or 1-octene may be produced. As the comonomers, not only ethylene, may be copolymerized but other alpha-olefins such as propylene, 1-butene, 1-hexene or 1-octene may be used.

A 3^{rd} product stream circulating in the slurry reactor and comprising a concentrated slurry, may be introduced into a second gas phase reactor (GPR2) arranged downstream of said slurry reactor and arranged in parallel to the first gas phase reactor (GPR1). In a preferred embodiment of the present invention, the solids concentration in the 1^{st} product stream is the same or higher than the solid concentration in the 3^{rd} product stream.

The 3^{rd} product stream may be polymerized in the presence of alpha-olefin monomers and optionally one or more alpha-olefin co-monomers and optionally hydrogen in said second gas phase reactor (GPR2) to obtain a 2^{nd} alpha-olefin product stream.

In the GPR2 the following conditions are preferably adjusted:

| GPR2 | |
|---|---|
| Temperature, ^{O}C | 70-85 |
| Pressure, barg | 13-22 |
| Monomer | Propylene |
| Comonomers | Ethylene |
| Split % | 10-25 |

The above conditions may be varied as occasion demands. Specifically, not only propylene may be polymerized but other alpha-olefins such as ethylene, 1-butene, 1-hexene or 1-octene may be produced. As the comonomers, not only ethylene, may be copolymerized but other alpha-olefins such as propylene, 1-butene, 1-hexene or 1-octene may be used.

According to the present invention the process may preferably be conducted in that the 1^{st} product stream obtained after step (c) and withdrawn from the slurry reactor is split into two product streams, i.e. a first secondary product stream (2a) and a second secondary product stream (2b).

The weight ratio of the streams (2a):(2b), i.e. weight ratio of the first secondary product stream to the second secondary product stream, may preferably controlled in a range of from 15:85 to 85:15 via flow control valve on the outlet stream.

In this embodiment of the present invention, the first secondary product stream (2a) may be introduced into said first gas phase reactor (GPR1), arranged downstream of said slurry reactor and said second secondary product stream (2a) is polymerized in the presence of alpha-olefin monomers and optionally one or more alpha-olefin co-monomers in said first gas phase reactor (GPR1) to obtain a 1^{st} alpha-olefin product stream.

| GPR1 | |
|---|---|
| Temperature, ^{O}C | 70-95 |
| Pressure, barg | 18-24 |
| Monomer | Propylene |
| Comonomers | Ethylene |
| Split % | 40-60 |

Preferably, the above conditions described for GPR1 may be applied for the polymerization of the first secondary product stream (2a) in GPR1 as well. On the other hand, the second secondary product stream (2b) may be introduced into said second gas phase reactor (GPR2), arranged downstream of said slurry reactor, and arranged in parallel to the first gas phase reactor (GPR1). Subsequently said second secondary product stream (2b) is polymerized in the presence of alpha-olefin monomers and optionally one or more alpha-olefin co-monomers in said second gas phase reactor (GPR2) to obtain a 2^{nd} alpha-olefin product stream.

| GPR2 | |
|---|---|
| Temperature, ^{O}C | 70-95 |
| Pressure, barg | 18-24 |
| Monomer | Propylene |
| Comonomers | Ethylene |
| Split % | 40-60 |

Preferably, the above conditions described for GPR2 may be applied for the polymerization of second secondary product stream (2b) in GPR2 as well.

Alternatively or additionally to the previous paragraph it is preferred that the operating temperature in the second polymerization reactor (GPR1) and in the third reactor (GPR2) and the optional the fourth reactor (preferably GPR3) is in the range of 70 to 95°C, more preferably in the range of 75 to 85°C.

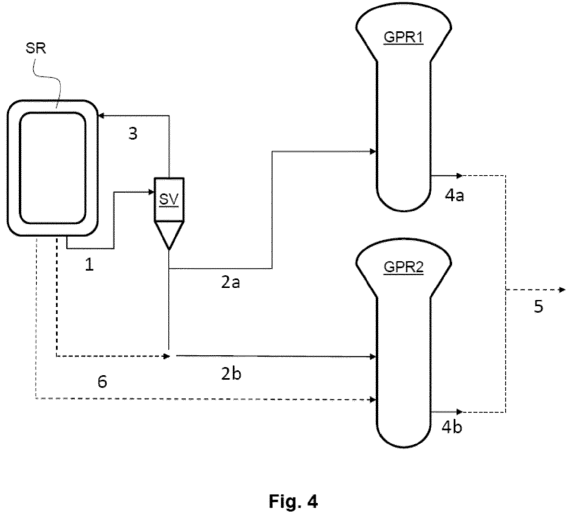

In this alternative embodiment of the invention of providing the 1^{st} product stream obtained after step (c) and withdrawn from the slurry reactor and splitting into two product streams, i.e. said first secondary product stream (2a) and said second secondary product stream (2b), the transfer of said 3^{rd} product stream (6) from the slurry reactor to said second gas phase reactor (GPR2) for polymerizing said 3^{rd} product stream (6) in the presence of alpha-olefin monomers and optionally one or more alpha-olefin co-monomers, is optional. However, as shown in Fig. 4, in a further preferred embodiment of the invention it may be provided.

In this alternative embodiment of the invention, the transfer of the 3^{rd} product stream (6) from the slurry reactor to the 2^{nd} gas phase reactor (GPR2) may be provided directly or the 3^{rd} product stream (6) may be combined with the second secondary product stream (2b) and both streams may be jointly transferred to the 2^{nd} gas phase reactor (GPR2), where polymerization of the 2^{nd} alpha-olefin product stream (4b) takes place. Fig. 4 takes account of these two alternatives by the dashed lines showing the transfer of 3^{rd} product stream (6). However, only one of these two alternatives specified by the dashed lines will be embodied at the same time.

When providing the 3^{rd} product stream (6) in any of the embodiments of the invention, the solids concentration in the 3^{rd} product stream (6) may preferably be lower than the solids concentration in the 1^{st} product stream (2) comprising said concentrated slurry.

In a preferred embodiment of the present invention, the solids concentration of the first secondary product stream (2a) is higher than the solids concentration of the second secondary product stream (2b). This can e.g. be achieved in a concentration step by removing a part of the fluid phase to provide a concentrated first secondary product stream (2a) and a 5^{th} product stream mainly comprising the fluid phase. The 5^{th} product stream may be recycled to the slurry reactor.

Preferably, the 1^{st} alpha-olefin product stream obtained in the above step (d) or step (e') and the 2^{nd} alpha-olefin product stream obtained in the above step (e) or step (f) may be combined to form a joined alpha-olefin product stream (5). This is particularly preferred in the production of multimodal polymers enabling single line downstream treatment. Equipment and production costs can be decreased considerably.

The above-described process may include blending processes such as mechanical blending, including mixing and melt blending processes and any combinations thereof as well as in-situ blending during the polymerization process. These can be carried out by methods known to the skilled person.

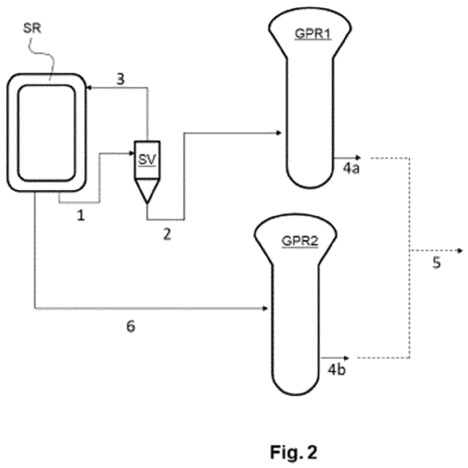

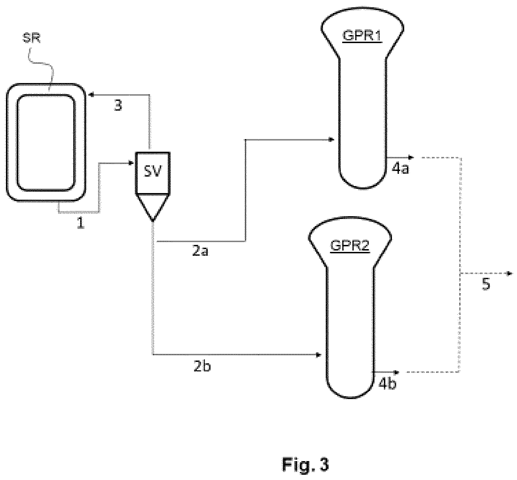

The process of the present invention may be conducted in a polymerization system as defined in claim 13. Preferred embodiments are defined in claims 18 to 20. These embodiments are illustrated in Fig. 2 and 3, respectively. Theses polymerization systems are adapted to carry out the processes of the present invention as described above.

The polymerization system according to the present invention may preferably further comprise respective transfer lines combining said 1^{st} alpha-olefin product stream exiting said first phase reactor and said 2^{nd} alpha-olefin product stream exiting said 2^{nd} gas phase reactor.

The polymerization system according to the present invention may alternatively defined according to claim 15. Thus, it comprises, according to this alternative, respective transfer lines splitting said 1^{st} product stream withdrawn from the slurry reactor into a first secondary product stream (2a) and a second secondary product stream (2b), wherein the 1^{st} product stream comprises said concentrated slurry, wherein said first secondary product stream (2a) is introduced into said first gas phase reactor (GPR1) and said second secondary product stream (2b) is introduced into said second gas phase reactor (GPR2).

The polymerization system according to the above alternative embodiment of the invention may preferably further comprise a transfer line for withdrawing from the slurry reactor a 3^{rd} product stream (6) and transferring it to said second gas phase reactor (GPR2), for polymerizing said 3^{rd} product stream (6) in the presence of alpha-olefin monomers and optionally one or more alpha-olefin co-monomers, thus obtaining said 2^{nd} alpha-olefin product stream (4b) exiting said second gas phase reactor (GPR2).

In this alternative embodiment of the invention, the solids concentration in the 3^{rd} product stream (6) may preferably be lower than the solids concentration in the 1^{st} product stream (2) comprises said concentrated slurry.

The polymerization system may preferably further comprise a flash unit (not shown in the figures) provided downstream of the slurry reactor and upstream of said first and second gas phase reactors for removing from said 1^{st} product stream essentially all of the remaining fluid phase and to provide a 4^{th} product stream containing a suspension of polymer solids and gases which is transferred to at least one of said first and second gas phase reactors.

A flash unit typically consists of a heated flash pipe and a receiving vessel. The slurry entering the flash unit may preferably have a solids concentration of 30 to 60 % by volume. In the flash unit, the remaining hydrocarbons are removed from the polymer. The flash pipe is preferably heated, e.g. by steam or water. If water is used for heating, the heating water can be advantageously taken from the jacket of the slurry reactor. The temperature is selected according to the composition of the hydrocarbon fluid so that the fluid is essentially evaporated. The phrase "essentially removing the fluid phase" means that a major fraction of the fluid phase is removed and only an amount of fluid that fills the volume between the polymer particles and the volume of pores in the polymer particles remains with the polymer. Typically, the temperature at the receiving vessel may be from 50 to 100 °C, preferably from 60 to 90 °C, in particular from 70 to 90 °C, and the pressure is preferably from 10 to 30 bar, more preferably from 12 to 27 bar, and in particular from 14 to 24 bar. The pressure is preferably higher than the pressure in the gas phase reactors, to allow smooth transfer of the polymer into the gas phase reactors. Advantageously, the pressure is at least 0.05 bar higher than in the gas phase reactors. At least a part of the overhead flow from the receiving vessel of the flash unit is passed to the recovery system for recycling into at least one of the slurry reactor and the gas phase reactors.

Before introduction into the gas phase reactors, the product flow from the flash receiving vessel can be passed through a gas exchange zone (not shown in the figures), where it is flushed countercurrently with essentially hydrogen free gas fraction from the diluent recovery or with a pure hydrocarbon, preferably propane, to reduce the amount of hydrogen carryover to the gas phase reactor. A gas exchange zone may be designed as described in WO 2004/039847.

### Experimental Part

In all reactor configurations, the following components were used.

### Reactor configuration 1 (comparative)

A loop - gas phase (GPR) reactor configuration was employed with both reactors coupled in series. A part of the slurry circulating in the first slurry (loop) reactor (SR) was introduced as a slurry stream (1) into a separation vessel (SV) such as a hydrocyclone to concentrate the solid content of the slurry fraction and a concentrated slurry (2) was then introduced as a product stream (underflow) into a downstream gas phase reactor (GPR). The overflow stream (3) exiting the hydrocyclone containing a lower solid concentration than the concentrated underflow and being rich in hydrocarbon(s) was recycled to the slurry (loop) reactor (SR). A product stream (4) exits the gas phase reactor (GPR) for further processing and end use.

In particular, the polymerisation was carried out first in a loop reactor at 70 °C and at 55 barg pressure. Liquefied propylene, working as a solvent and monomer, was continuously fed to the reactor. A pre-polymerized Ziegler-Natta catalyst was fed to the loop reactor. Ethylene was added to the reactor as a co-monomer. The polymer produced in the loop reactor was withdrawn from the loop reactor as a slurry with solid concentration of ~32 wt.% and fed to a hydrocyclone. The bottom flow of the hydrocyclone was concentrated to ~44 wt% and transferred to a fluidised bed gas phase reactor (GPR) arranged downstream of the loop reactor. The top flow of the hydrocyclone was returned to the loop reactor. The polymerization was further carried out in the gas phase reactor (GPR), fresh gaseous propylene, ethylene and hydrogen were fed to the reactor to attain the targeted polymer properties. The operating conditions of the GPR were ~ 85 °C and ~21 barg. The production rate ratio between the loop and the gas phase reactor (split) was controlled to meet the targeted product properties in the final polymer. Unreacted monomer and comonomers gases were recovered from the product tank. The gas stream was filtered, compressed and passed through a recovery system and circulated back to the reactors. The polymer powder from the product tank was transferred to the degassing unit and further to pelletization.

### Reactor configuration 2 (Inventive Example 1)

A loop reactor - gas phase (GPR1) - gas phase (GPR2) reactor configuration was employed, whereby reactors GPR1 and GPR2 were configured in parallel and downstream of the loop reactor as described herein. A separation vessel (SV) such as a hydrocyclone was used in the same manner as described for reactor configuration 1, whereby the concentrated slurry (2) obtained from the underflow of the hydrocyclone was introduced into an inlet of GPR1 and a slurry (6) circulating in the loop reactor (SR) having a solid concentration lower than the solid concentration of the concentrated slurry (2), was introduced into an inlet of GPR2. In each of GPR1 and GPR2 a polypropylene product (4a, 4b) was produced under the conditions indicated below.

In particular, the polymerisation was first carried out in a loop reactor at 70 °C and at ~55 barg pressure. Liquefied propylene, working as a solvent and monomer, was continuously fed to the reactor. A pre-polymerized Ziegler-Natta catalyst was fed to the loop reactor. Ethylene was added to the reactor as a co-monomer. The polymer produced in the loop reactor was withdrawn from the loop reactor as a slurry with solid concentration of ~32 wt% and fed to a hydrocyclone. The bottom flow of the hydrocyclone was concentrated to ~44 wt% and transferred to a fluidised bed gas phase reactor (GPR1) arranged downstream of the loop reactor. The top flow of the hydrocyclone was returned to the loop reactor. Simultaneously, another slurry stream was withdrawn from the bottom of the loop reactor and directly transferred to the 2^{nd} fluidized bed reactor (GPR2) arranged in parallel to GPR1 and downstream of the loop reactor. The solid concentration in this slurry stream was ~38 wt%, due to settling behaviour at the outlet valve. The polymerization was further carried out in the gas phase reactors (GPR1 and GPR2) arranged in parallel and downstream of the slurry reactor. Simultaneously, fresh gaseous propylene, ethylene and hydrogen were fed to both of the gas phase reactors to attain the targeted polymer properties. The operating conditions of the GPR1 and GPR2 were ~ 85 °C and ~21 barg. The production rate ratios between the loop and the gas phase reactors (split) were controlled to meet the targeted product properties in the final polymer. Unreacted monomer and comonomers gases were recovered from the product tank. The gas stream was filtered, compressed and passed through a recovery system and circulated back to the reactors. The polymer powder from the product tank was transferred to the degassing unit and further to pelletization.

Optionally both product streams (4a, 4b) may be combined to a combined product stream (5). However, this is not mandatory.

### Reactor configuration 3 (Inventive Example 2)

A loop reactor - gas phase (GPR1) - gas phase (GPR2) reactor configuration was employed, whereby reactors GPR1 and GPR2 were configured in parallel and downstream of the loop reactor as described herein. A separation vessel (SV) such as a hydrocyclone was used in the same manner as described for reactor configuration 1, whereby the concentrated slurry obtained from the underflow of the hydrocyclone was split into two product stream (2a) and (2b), and product stream (2a) was introduced into an inlet of GPR1, whereas product stream (2b) was introduced into an inlet of GPR2. In each of GPR1 and GPR2 a polypropylene product (4a, 4b) was produced under the conditions indicated below.

The polymerisation was first carried out in a loop reactor at 70 °C and at ~55 barg pressure. Liquefied propylene, working as a solvent and monomer, was continuously fed to the reactor. A pre-polymerized Ziegler-Natta catalyst was fed to the loop reactor. Ethylene was added to the reactor as a co-monomer. The polymer produced in the loop reactor was withdrawn from the loop reactor as a slurry with solid concentration of ~38 wt% and fed to a hydrocyclone. The bottom flow of the hydrocyclone was concentrated to ~44 wt% and divided into two steams in a ratio of 50:50. One part was transferred to the 1^{st} fluidised bed gas phase reactor (GPR1) arranged downstream of the loop reactor and the other part was transferred to the 2^{nd} fluidized bed gas phase reactor (GPR2) arranged in parallel to GPR1 and downstream of the loop reactor. The top flow of the hydrocyclone was returned to the loop reactor. The polymerization was further carried out in the gas phase reactors (GPR1 and GPR2). Fresh gaseous propylene, ethylene and hydrogen were simultaneously fed to both gas phase reactors to attain the targeted polymer properties. The operating conditions of GPR1 and GPR2 were ~ 85 °C and ~21 barg. The production rate ratios between the loop and the gas phase reactors (split) were controlled to meet the targeted product properties in the final polymer. Unreacted monomer and comonomers gases were recovered from the product tank. The gas stream was filtered, compressed and passed through a recovery system and circulated back to the reactors. The polymer powder from the product tank was transferred to the degassing unit and further to pelletization.

Optionally both product streams (4a, 4b) may be combined to a combined product stream (5). However, this is not mandatory.

The results are shown in the Table provided below.

**Table 1**

| | | | |
|---|---|---|---|
| **Reference Example** | **Loop** -> **HyCy->GPR1** | Total Production rate, kg/h | 71.3 |
| | | Production rate in Loop, kg/h | 32.1 |
| | | Production rate in GPR1, kg/h | 39.2 |
| | | Production rate in GPR2, kg/h | - |
| | | Loop Split, % | 45 |
| | | GPR1 Split, % | 55 |
| | | GPR2 Split, % | - |
| **Example 1** | **Loop** -> **HyCy->GPR1 Loop** -> **GPR2** | Total Production rate, kg/h | 77.5 |
| | | Production rate in Loop, kg/h | 32.1 |
| | | Production rate in GPR1, kg/h | 39.2 |
| | | Production rate in GPR2, kg/h | 6.2 |
| | | Loop Split, % | 41 |
| | | GPR1 Split, % | 51 |
| | | GPR2 Split, % | 8 |
| **Example 2** | **Loop** -> **HyCy->GPR1+GPR2** | Total Production rate, kg/h | 77.5 |
| | | Production rate in Loop, kg/h | 32.1 |
| | | Production rate in GPR1, kg/h | 39.2 |
| | | Production rate in GPR2, kg/h | 6.2 |
| | | Loop Split, % | 41 |
| | | GPR1 Split, % | 51 |
| | | GPR2 Split, % | 8 |

It can be seen by the above examples that the inventive process achieves higher production rates which are partly due to less carry-over of reactants to the GPR's. I Example 1 produced additional polymer due to the parallel arrangement of GPR2 and thus substantially increased the total production rate of polymer. The carry-over of reactants to the gas phase reactors could be reduced as slurry streams with higher concentrations (44 wt.%/38 wt.% solid concentration) were fed to the gas phase reactors.

The same advantages are evident from Example 2, compared to the Comparative Example. Still further, Example 2 had the additional effect over Example 1 in that the concentrated slurry stream obtained at the bottom flow of the hydrocyclone (44 wt.% solid concentration) was split into two secondary streams which were fed in parallel to the gas phase reactors GPR1 and GPR2. Thus, the carry-over of reactants to the gas phase reactors could be reduced even more.

## Claims

1. A process for producing alpha-olefin polymers in the presence of a polymerization catalyst in a continuously operated multistage polymerisation sequence, comprising the steps of:
(a) polymerizing an alpha-olefin monomer and optionally one or more alpha-olefin co-monomers in a slurry reactor in the presence of a hydrocarbon diluent or liquid monomer in a slurry phase to obtain an alpha-olefin polymer, the slurry phase having a first concentration of solids,
(b) continuously withdrawing from the slurry reactor a polymer slurry (1) containing polymer and a fluid phase,
(c) concentrating at least a part of the polymer slurry (1) by removing a part of the fluid phase to provide a 1^{st} product stream (2) comprising a concentrated slurry having a second solids concentration, which is higher than the first solids concentration, and a 2^{nd} product stream (3) mainly comprising the fluid phase,
(d) polymerizing said 1^{st} product stream (2) in the presence of alpha-olefin monomers and optionally one or more alpha-olefin co-monomers in a first gas phase reactor (GPR1) arranged downstream of said slurry reactor to obtain a 1^{st} alpha-olefin product stream (4a),
(e) polymerizing a 3^{rd} product stream (6), withdrawn from said slurry reactor, in the presence of alpha-olefin monomers and optionally one or more alpha-olefin co-monomers in a second gas phase reactor (GPR2) to obtain a 2^{nd} alpha-olefin product stream (4b).

2. The process according to claim 1, wherein said 3^{rd} product stream comprises a concentrated slurry having a solids concentration lower than the second solids concentration of said 1^{st} product stream.

3. A process for producing alpha-olefin polymers in the presence of a polymerization catalyst in a continuously operated multistage polymerisation sequence, comprising the steps of:
(a) polymerizing an alpha-olefin monomer and optionally one or more alpha-olefin co-monomers in a slurry reactor in the presence of a hydrocarbon diluent or liquid monomer in a slurry phase to obtain an alpha-olefin polymer, the slurry phase having a first concentration of solids,
(b) continuously withdrawing from the slurry reactor a polymer slurry (1) containing polymer and a fluid phase,
(c) concentrating at least a part of the polymer slurry (1) by removing a part of the fluid phase to provide a 1^{st} product stream (2) comprising a concentrated slurry having a second solids concentration, which is higher than the first solids concentration, and a 2^{nd} product stream (3) mainly comprising the fluid phase,
(d') splitting the 1^{st} product stream (2) into a first secondary product stream (2a) and a second secondary product stream (2b), wherein the 1^{st} product stream (2) comprises said concentrated slurry,
(e') polymerizing said first secondary product stream (2a) in the presence of alpha-olefin monomers and optionally one or more alpha-olefin co-monomers in a first gas phase reactor (GPR1) arranged downstream of said slurry reactor to obtain a 1^{st} alpha-olefin product stream (4a), and
(f) polymerizing said second secondary product stream (2b) in the presence of alpha-olefin monomers and optionally one or more alpha-olefin co-monomers in a second gas phase reactor (GPR2) arranged downstream of said slurry reactor, and arranged in parallel to the first gas phase reactor (GPR1), to obtain a 2^{nd} alpha-olefin product stream (4b).

4. The process according to claim 3, wherein
a 3^{rd} product stream (6), withdrawn from said slurry reactor is polymerized, in the presence of alpha-olefin monomers and optionally one or more alpha-olefin co-monomers in said second gas phase reactor (GPR2) to obtain said 2^{nd} alpha-olefin product stream (4b).

5. The process according to any one of the preceding claims, wherein the solids concentration in the 3^{rd} product stream (6) is lower than the solids concentration in the 1^{st} product stream (2) comprising said concentrated slurry.

6. The process according to any one of the preceding claims, wherein step (c) is conducted in a hydrocyclone.

7. The process according to claim 6, wherein the polymer slurry (1) is concentrated to provide an underflow, which comprises the concentrated slurry (2), and an overflow (3), which is rich in hydrocarbon(s).

8. The process according to claim 7, wherein the overflow (3) is recycled to the slurry reactor.

9. The process according to any one of the preceding claims, wherein the 1^{st} alpha-olefin product stream (4a) obtained in step (d) of claim 1 or step (e') of claim 3 and the 2^{nd} alpha-olefin product stream (4b) obtained in step (e) of claim 1 or step (f) of claim 3 are combined to form a joined alpha-olefin product stream (5).

10. The process according to any one of the preceding claims, wherein said 1^{st} product stream (2) comprising the concentrated slurry is withdrawn from the slurry reactor, whereby the concentration of solids at the outlet is higher than the concentration of solids in the slurry reactor.

11. The process according to any one of claims 3 to 10, wherein the solids concentration in the first secondary product stream (2a) is higher than the solids concentration in the second secondary product stream (2b).

12. The process according to any one of the preceding claims, wherein after step (c) of claim 1 said 1^{st} product stream (2) comprising said concentrated slurry is transferred to a flash unit in order to remove essentially all of the remaining fluid phase and to provide a modified product stream containing a suspension of polymer solids and gases, and said modified product stream is polymerized in said first gas phase reactor (GPR1).

13. A polymerization system for producing alpha-olefin polymers in the presence of a polymerization catalyst in a continuously operated multistage polymerisation sequence, comprising:
(A) a slurry reactor for polymerizing an alpha-olefin monomer and optionally one or more alpha-olefin co-monomers in the presence of a hydrocarbon diluent or liquid monomer in a slurry phase to obtain an alpha-olefin polymer, the slurry phase having a first solids concentration, the slurry reactor having at least one outlet allowing continuous withdrawal of a polymer slurry,
(B) a separation vessel for concentrating at least a part of the polymer slurry withdrawn from the slurry reactor by removing a part of the fluid phase to provide a 1^{st} product stream (2) comprising a concentrated slurry having a second solids concentration, which is higher than the first solids concentration, and a 2^{nd} product stream (3) mainly comprising the fluid phase, the separation vessel having an overflow and an underflow,
(C) a first gas phase reactor (GPR1) arranged downstream of the slurry reactor for polymerizing the 1^{st} product stream (2) in the presence of alpha-olefin monomers and optionally one or more alpha-olefin co-monomers, thus obtaining a 1^{st} alpha-olefin product stream (4a) exiting said first gas phase reactor (GPR1), and
(D) a second gas phase reactor (GPR2) arranged downstream of the slurry reactor and arranged in parallel to the first gas phase reactor (GPR1) for polymerizing a 3^{rd} product stream (6), withdrawn from the slurry reactor in the presence of alpha-olefin monomers and optionally one or more alpha-olefin co-monomers, thus obtaining a 2^{nd} alpha-olefin product stream (4b) exiting said second gas phase reactor (GPR2).

14. The polymerization system according to claim 13, wherein said 3^{rd} product stream (6) comprises a concentrated slurry having a solids concentration lower than the second solids concentration of said 1^{st} product stream (2).

15. A polymerization system for producing alpha-olefin polymers in the presence of a polymerization catalyst in a continuously operated multistage polymerisation sequence, comprising:
(A) a slurry reactor for polymerizing an alpha-olefin monomer and optionally one or more alpha-olefin co-monomers in the presence of a hydrocarbon diluent or liquid monomer in a slurry phase to obtain an alpha-olefin polymer, the slurry phase having a first solids concentration, the slurry reactor having at least one outlet allowing continuous withdrawal of a polymer slurry,
(B) a separation vessel for concentrating at least a part of the polymer slurry withdrawn from the slurry reactor by removing a part of the fluid phase to provide a 1^{st} product stream (2) comprising a concentrated slurry having a second solids concentration, which is higher than the first solids concentration, and a 2^{nd} product stream (3) mainly comprising the fluid phase, the separation vessel having an overflow and an underflow, and
(G) respective transfer lines for splitting the 1^{st} product stream (2) withdrawn from the slurry reactor into a first secondary product stream (2a) and a second secondary product stream (2b), the 1^{st} product stream (2) comprising said concentrated slurry, wherein
said first secondary product stream (2a) is polymerized in the presence of alpha-olefin monomers and optionally one or more alpha-olefin co-monomers in a first gas phase reactor (GPR1), arranged downstream of said slurry reactor to obtain a 1^{st} alpha-olefin product stream (4a), and
said second secondary product stream (2b) is polymerized in the presence of alpha-olefin monomers and optionally one or more alpha-olefin co-monomers in a second gas phase reactor (GPR2) arranged downstream of said slurry reactor, and arranged in parallel to the first gas phase reactor (GPR1) to obtain a 2^{nd} alpha-olefin product stream (4b).

16. The polymerization system according to claim 15, further comprising:
(D') a transfer line for withdrawing from the slurry reactor a 3^{rd} product stream (6) and transferring it to said second gas phase reactor (GPR2), for polymerizing said 3^{rd} product stream (6) in the presence of alpha-olefin monomers and optionally one or more alpha-olefin co-monomers, thus obtaining said 2^{nd} alpha-olefin product stream (4b) exiting said second gas phase reactor (GPR2).

17. The polymerization system according to claim 15 or 16, wherein the solids concentration in the 3^{rd} product stream (6) is lower than the solids concentration in the 1^{st} product stream (2) comprising said concentrated slurry.

18. The polymerization system according to any one of claims 13 to 17, wherein said separation vessel is a hydrocyclone.

19. The polymerization system according to any one of claims 13 to 18, further comprising
(H) respective transfer lines combining said 1^{st} alpha-olefin product stream (4a) exiting said first gas phase reactor (GPR1) and said 2^{nd} alpha-olefin product stream (4b) exiting said 2^{nd} gas phase reactor (GPR2) to form a joined alpha-olefin product stream (5).

20. The polymerization system according to any one of claims 13 to 19, further comprising
(I) a flash unit provided downstream of the slurry reactor and upstream of one or both of said first and second gas phase reactors for removing from said 1^{st} product stream (2) and/or 3^{rd} product stream (6) essentially all of the remaining fluid phase and to provide a modified product stream containing a suspension of polymer solids and gases which is transferred to at least one of said first and second gas phase reactors.

## Patentansprüche

1. Verfahren zum Herstellen von Alpha-Olefin-Polymeren in Anwesenheit eines Polymerisationskatalysators in einer kontinuierlich betriebenen mehrstufigen Polymerisationssequenz, die folgenden Schritte umfassend:
(a) Polymerisieren eines Alpha-Olefin-Monomers und optional eines oder mehrerer Alpha-Olefin-Comonomere in einem Suspensionsreaktor in Anwesenheit eines Kohlenwasserstoff-Verdünnungsmittels oder eines flüssigen Monomers in einer Suspensionsphase für das Erhalten eines Alpha-Olefin-Polymers, wobei die Suspensionsphase eine erste Konzentration von Festkörpern aufweist,
(b) kontinuierliches Entnehmen, aus dem Suspensionsreaktor, einer Polymersuspension (1), die ein Polymer und eine fluide Phase enthält,
(c) Konzentrieren wenigstens eines Teils der Polymersuspension (1) durch das Entfernen eines Teils der fluiden Phase für das Vorsehen eines ersten Produktstroms (2), der eine konzentrierte Suspension mit einer zweiten Festkörperkonzentration, die höher als die erste Festkörperkonzentration ist, aufweist, und eines zweiten Produktstroms (3), der hauptsächlich die fluide Phase aufweist,
(d) Polymerisieren des ersten Produktstroms (2) in Anwesenheit von Alpha-Olefin-Monomeren und optional einem oder mehreren Alpha-Olefin-Comonomeren in einem ersten Gasphasenreaktor (GPR1), der stromabwärts von dem Suspensionsreaktor angeordnet ist, für das Erhalten eines ersten Alpha-Olefin-Produktstroms (4a),
(e) Polymerisieren eines dritten Produktstroms (6), der aus dem Suspensionsreaktor entnommen wird, in Anwesenheit von Alpha-Olefin-Monomeren und optional einem oder mehreren Alpha-Olefin-Comonomeren in einem zweiten Gasphasenreaktor (GPR2) für das Erhalten eines zweiten Alpha-Olefin-Produktstroms (4b).

2. Verfahren nach Anspruch 1, wobei der dritte Produktstrom eine konzentrierte Suspension mit einer Festkörperkonzentration, die niedriger als die zweite Festkörperkonzentration des ersten Produktstroms ist, umfasst.

3. Verfahren zum Herstellen von Alpha-Olefin-Polymeren in Anwesenheit eines Polymerisationskatalysators in einer kontinuierlich betriebenen mehrstufigen Polymerisationssequenz, die folgenden Schritte umfassend:
(a) Polymerisieren eines Alpha-Olefin-Monomers und optional eines oder mehrerer Alpha-Olefin-Comonomere in einem Suspensionsreaktor in Anwesenheit eines Kohlenwasserstoff-Verdünnungsmittels oder eines flüssigen Monomers in einer Suspensionsphase für das Erhalten eines Alpha-Olefin-Polymers, wobei die Suspensionsphase eine erste Konzentration von Festkörpern aufweist,
(b) kontinuierliches Entnehmen, aus dem Suspensionsreaktor, einer Polymersuspension (1), die ein Polymer und eine fluide Phase enthält,
(c) Konzentrieren wenigstens eines Teils der Polymersuspension (1) durch das Entfernen eines Teils der fluiden Phase für das Vorsehen eines ersten Produktstroms (2), der eine konzentrierte Suspension mit einer zweiten Festkörperkonzentration, die höher als die erste Festkörperkonzentration ist, aufweist, und eines zweiten Produktstroms (3), der hauptsächlich die fluide Phase aufweist,
(d') Aufteilen des ersten Produktstroms (2) in einen ersten sekundären Produktstrom (2a) und einen zweiten sekundären Produktstrom (2b), wobei der erste Produktstrom (2) die konzentrierte Suspension aufweist,
(e') Polymerisieren des ersten sekundären Produktstroms (2a) in Anwesenheit von Alpha-Olefin-Monomeren und optional einem oder mehreren Alpha-Olefin-Comonomeren in einem ersten Gasphasenreaktor (GPR1), der stromabwärts von dem Suspensionsreaktor angeordnet ist, für das Erhalten eines ersten Alpha-Olefin-Produktstroms (4a), und
(f) Polymerisieren des zweiten sekundären Produktstroms (2b) in Anwesenheit von Alpha-Olefin-Monomeren und optional einem oder mehreren Alpha-Olefin-Comonomeren in einem zweiten Gasphasenreaktor (GPR2), der stromabwärts von dem Suspensionsreaktor und parallel zu dem ersten Gasphasenreaktor (GPR1) angeordnet ist, für das Erhalten eines zweiten Alpha-Olefin-Produktstroms (4b).

4. Verfahren nach Anspruch 3, wobei:
ein dritter Produktstrom (6), der aus dem Suspensionsreaktor entnommen wird, in Anwesenheit von Alpha-Olefin-Monomeren und optional einem oder mehreren Alpha-Olefin-Comonomeren in dem zweiten Gasphasenreaktor (GPR2) polymerisiert wird für das Erhalten des zweiten Alpha-Olefin-Produktstroms (4b).

5. Verfahren nach einem der vorstehenden Ansprüche, wobei die Festkörperkonzentration in dem dritten Produktstrom (6) niedriger als die Festkörperkonzentration in dem ersten Produktstrom (2) mit der konzentrierten Suspension ist.

6. Verfahren nach einem der vorstehenden Ansprüche, wobei der Schritt (c) in einem Hydrozyklon durchgeführt wird.

7. Verfahren nach Anspruch 6, wobei die Polymersuspension (1) konzentriert wird für das Vorsehen eines Unterflusses, der die konzentrierte Suspension (2) umfasst, und eines Überflusses (3), der reich an Kohlenwasserstoff(en) ist.

8. Verfahren nach Anspruch 7, wobei der Überfluss (3) zu dem Suspensionsreaktor zurückgeführt wird.

9. Verfahren nach einem der vorstehenden Ansprüche, wobei der erste Alpha-Olefin-Produktstrom (4a), der in Schritt (d) von Anspruch 1 oder Schritt (e') von Anspruch 3 erhalten wird, und der zweite Alpha-Olefin-Produktstrom (4b), der in Schritt (e) von Anspruch 1, oder Schritt (f) von Anspruch 3 erhalten wird, kombiniert werden, um einen verbundenen Alpha-Olefin-Produktstrom (5) zu bilden.

10. Verfahren nach einem der vorstehenden Ansprüche, wobei der erste Produktstrom (2), der die konzentrierte Suspension umfasst, aus dem Suspensionsreaktor entnommen wird, wobei die Festkörperkonzentration am Auslass höher als die Festkörperkonzentration in dem Suspensionsreaktor ist.

11. Verfahren nach einem der Ansprüche 3 bis 10, wobei die Festkörperkonzentration in dem ersten sekundären Produktstrom (2a) höher als die Festkörperkonzentration in dem zweiten sekundären Produktstrom (2b) ist.

12. Verfahren nach einem der vorstehenden Ansprüche, wobei nach dem Schritt (c) von Anspruch 1 der erste Produktstrom (2), der die konzentrierte Suspension umfasst, zu einer Flash-Einheit geführt wird, um im Wesentlichen die gesamte verbleibende fluide Phase zu entfernen und einen modifizierten Produktstrom vorzusehen, der eine Suspension von Polymer-Festkörpern und -Gasen enthält, wobei der modifizierte Produktstrom in dem ersten Gasphasenreaktor (GPR1) polymerisiert wird.

13. Polymerisationssystem zum Herstellen von Alpha-Olefin-Polymeren in Anwesenheit eines Polymerisationskatalysators in einer kontinuierlich betriebenen mehrstufigen Polymerisationssequenz, umfassend:
(A) einen Suspensionsreaktor für das Polymerisieren eines Alpha-Olefin-Monomers und optional eines oder mehrerer Alpha-Olefin-Comonomere in Anwesenheit eines Kohlenwasserstoff-Verdünnungsmittels oder eines flüssigen Monomers in einer Suspensionsphase für das Erhalten eines Alpha-Olefin-Polymers, wobei die Suspensionsphase eine erste Festkörperkonzentration aufweist, wobei der Suspensionsreaktor wenigstens einen Auslass, der eine kontinuierliche Entnahme einer Polymersuspension erlaubt, aufweist,
(B) einen Abscheider für das Konzentrieren wenigstens eines Teils der aus dem Suspensionsreaktor entnommenen Polymersuspension durch das Entfernen eines Teils der fluiden Phase für das Vorsehen eines ersten Produktstroms (2), der eine konzentrierte Suspension mit einer zweiten Festkörperkonzentration, die höher als die erste Festkörperkonzentration ist, aufweist, und eines zweiten Produktstroms (3), der hauptsächlich die fluide Phase aufweist, wobei der Abscheider einen Überfluss und einen Unterfluss aufweist,
(C) einen ersten Gasphasenreaktor (GPR1), der stromabwärts von dem Suspensionsreaktor angeordnet ist, für das Polymerisieren des ersten Produktstroms (2) in Anwesenheit von Alpha-Olefin-Monomeren und optional einem oder mehreren Alpha-Olefin-Comonomeren für das Erhalten eines ersten Alpha-Olefin-Produktstroms (4a), der aus dem ersten Gasphasenreaktor (GPR1) austritt, und
(D) einen zweiten Gasphasenreaktor (GPR2), der stromabwärts von dem Suspensionsreaktor und parallel zu dem ersten Gasphasenreaktor (GPR1) angeordnet ist, für das Polymerisieren eines dritten Produktstroms (6), der aus dem Suspensionsreaktor entnommen wird, in Anwesenheit von Alpha-Olefin-Monomeren und optional einem oder mehreren Alpha-Olefin-Comonomeren für das Erhalten eines zweiten Alpha-Olefin-Produktstroms (4b), der aus dem zweiten Gasphasenreaktor (GPR2) austritt.

14. Polymerisationssystem nach Anspruch 13, wobei der dritte Produktstrom (6) eine konzentrierte Suspension umfasst, die eine niedrigere Festkörperkonzentration als die zweite Festkörperkonzentration des ersten Produktstroms (2) aufweist.

15. Polymerisationssystem für das Erzeugen von Alpha-Olefin-Polymeren in Anwesenheit eines Polymerisationskatalysators in einer kontinuierlich betriebenen mehrstufigen Polymerisationssequenz, umfassend:
(A) einen Suspensionsreaktor für das Polymerisieren eines Alpha-Olefin-Monomers und optional eines oder mehrerer Alpha-Olefin-Comonomere in Anwesenheit eines Kohlenwasserstoff-Verdünnungsmittels oder eines flüssigen Monomers in einer Suspensionsphase für das Erhalten eines Alpha-Olefin-Polymers, wobei die Suspensionsphase eine erste Festkörperkonzentration aufweist, wobei der Suspensionsreaktor wenigstens einen Auslass, der eine kontinuierliche Entnahme einer Polymersuspension erlaubt, aufweist,
(B) einen Abscheider für das Konzentrieren wenigstens eines Teils der aus dem Suspensionsreaktor entnommenen Polymersuspension durch das Entfernen eines Teils der fluiden Phase für das Vorsehen eines ersten Produktstroms (2), der eine konzentrierte Suspension mit einer zweiten Festkörperkonzentration, die höher als die erste Festkörperkonzentration ist, aufweist, und eines zweiten Produktstroms (3), der hauptsächlich die fluide Phase aufweist, wobei der Abscheider einen Überfluss und einen Unterfluss aufweist, und
(G) entsprechende Führungsleitungen für das Aufteilen des aus dem Suspensionsreaktor entnommenen ersten Produktstroms (2) in einen ersten sekundären Produktstrom (2a) und einen zweiten sekundären Produktstrom (2b), wobei der erste Produktstrom (2) die konzentrierte Suspension aufweist,
wobei der erste sekundäre Produktstrom (2a) in Anwesenheit von Alpha-Olefin-Monomeren und optional einem oder mehreren Alpha-Olefin-Comonomeren in einem ersten Gasphasenreaktor (GPR1), der stromabwärts von dem Suspensionsreaktor angeordnet ist, polymerisiert wird für das Erhalten eines ersten Alpha-Olefin-Produktstroms (4a), und
wobei der zweite sekundäre Produktstrom (2b) in Anwesenheit von Alpha-Olefin-Monomeren und optional einem oder mehreren Alpha-Olefin-Comonomeren in einem zweiten Gasphasenreaktor (GPR2), der stromabwärts von dem Suspensionsreaktor und parallel zu dem ersten Gasphasenreaktor (GPR1) angeordnet ist, polymerisiert wird für das Erhalten eines zweiten Alpha-Olefin-Produktstroms (4b).

16. Polymerisationssystem nach Anspruch 15, das weiterhin umfasst:
(D') eine Führungsleitung für das Entnehmen, aus dem Suspensionsreaktor, eines dritten Produktstroms (6) und das Führen von diesem zu dem zweiten Gasphasenreaktor (GPR2) für das Polymerisieren des dritten Produktstroms (6) in Anwesenheit von Alpha-Olefin-Monomeren und optional einem oder mehreren Alpha-Olefin-Comonomeren für das Erhalten des zweiten Alpha-Olefin-Produktstroms (4b), der aus dem zweiten Gasphasenreaktor (GPR2) austritt.

17. Polymerisationssystem nach Anspruch 15 oder 16, wobei die Festkörperkonzentration in dem dritten Produktstrom (6) niedriger als die Festkörperkonzentration in dem ersten Produktstrom (2), der die konzentrierte Suspension umfasst, ist.

18. Polymerisationssystem nach einem der Ansprüche 13 bis 17, wobei der Abscheider ein Hydrozyklon ist.

19. Polymerisationssystem nach einem der Ansprüche 13 bis 18, das weiterhin umfasst:
(H) entsprechende Führungsleitungen, die den ersten Alpha-Olefin-Produktstrom (4a), der aus dem ersten Gasphasenreaktor (GPR1) austritt, und den zweiten Alpha-Olefin-Produktstrom (4b), der aus dem zweiten Gasphasenreaktor (GPR2) austritt, kombinieren, um einen verbundenen Alpha-Olefin-Produktstrom (5) zu bilden.

20. Polymerisationssystem nach einem der Ansprüche 13 bis 19, das weiterhin umfasst:
(I) eine Flash-Einheit, die stromaufwärts von dem Suspensionsreaktor und stromaufwärts von einem oder beiden der ersten und zweiten Gasphasenreaktoren angeordnet ist, für das Entfernen, aus dem ersten Produktstrom (2) und/oder dem dritten Produktstrom (6), von im Wesentlichen der gesamten verbleibenden fluiden Phase und für das Vorsehen eines modifizierten Produktstroms, der eine Suspension von Polymer-Festkörpern und -Gasen enthält und zu wenigstens einem der ersten und zweiten Gasphasenreaktoren geführt wird.

## Revendications

1. Procédé de production de polymères d'alpha-oléfines en présence d'un catalyseur de polymérisation dans une séquence de polymérisation multi-étapes fonctionnant en continu, comprenant les étapes suivantes :
(a) la polymérisation d'un monomère alpha-oléfine et éventuellement d'un ou plusieurs co-monomères alpha-oléfine dans un réacteur à suspension en présence d'un diluant hydrocarboné ou d'un monomère liquide dans une phase de suspension pour obtenir un polymère d'alpha-oléfine, la phase de suspension ayant une première concentration de solides,
(b) le prélèvement en continu depuis le réacteur à suspension d'une suspension de polymère (1) contenant du polymère et une phase fluide,
(c) la concentration d'au moins une partie de la suspension de polymère (1) en éliminant une partie de la phase fluide pour fournir un premier flux de produit (2) comprenant une suspension concentrée ayant une deuxième concentration de solides, qui est supérieure à la première concentration de solides, et un deuxième flux de produit (3) comprenant principalement la phase fluide,
(d) la polymérisation dudit premier flux de produit (2) en présence de monomères alpha-oléfines et éventuellement d'un ou plusieurs co-monomères alpha-oléfines dans un premier réacteur en phase gazeuse (GPR1) agencé en aval dudit réacteur à suspension pour obtenir un premier flux de produit alpha-oléfine (4a),
(e) la polymérisation d'un troisième flux de produit (6), prélevé dans ledit réacteur à suspension, en présence de monomères alpha-oléfines et éventuellement d'un ou plusieurs comonomères alpha-oléfines dans un deuxième réacteur en phase gazeuse (GPR2) pour obtenir un deuxième flux de produit alpha-oléfine (4b).

2. Procédé selon la revendication 1, dans lequel ledit troisième flux de produit comprend une suspension concentrée ayant une concentration de solides inférieure à la deuxième concentration de solides dudit premier flux de produit.

3. Procédé de production de polymères d'alpha-oléfines en présence d'un catalyseur de polymérisation dans une séquence de polymérisation multi-étapes fonctionnant en continu, comprenant les étapes suivantes :
(a) la polymérisation d'un monomère alpha-oléfine et éventuellement d'un ou plusieurs co-monomères alpha-oléfine dans un réacteur à suspension en présence d'un diluant hydrocarboné ou d'un monomère liquide dans une phase de suspension pour obtenir un polymère d'alpha-oléfine, la phase de suspension ayant une première concentration de solides,
(b) le prélèvement en continu depuis le réacteur à suspension d'une suspension de polymère (1) contenant du polymère et une phase fluide,
(c) la concentration d'au moins une partie de la suspension de polymère (1) en éliminant une partie de la phase fluide pour fournir un premier flux de produit (2) comprenant une suspension concentrée ayant une deuxième concentration de solides, qui est supérieure à la première concentration de solides, et un deuxième flux de produit (3) comprenant principalement la phase fluide,
(d') la division du premier flux de produit (2) en un premier flux de produit secondaire (2a) et un deuxième flux de produit secondaire (2b), le premier flux de produit (2) comprenant ladite suspension concentrée,
(e') la polymérisation dudit premier flux de produit secondaire (2a) en présence de monomères alpha-oléfines et éventuellement d'un ou plusieurs comonomères alpha-oléfines dans un premier réacteur en phase gazeuse (GPR1) agencé en aval dudit réacteur à suspension pour obtenir un premier flux de produit alpha-oléfine (4a), et
(f) la polymérisation dudit deuxième flux de produit secondaire (2b) en présence de monomères alpha-oléfines et éventuellement d'un ou plusieurs comonomères alpha-oléfines dans un deuxième réacteur en phase gazeuse (GPR2) agencé en aval dudit réacteur à suspension et agencé parallèlement au premier réacteur en phase gazeuse (GPR1), pour obtenir un deuxième flux de produit alpha-oléfine (4b).

4. Procédé selon la revendication 3, dans lequel
un troisième flux de produit (6), prélevé dans ledit réacteur à suspension, est polymérisé, en présence de monomères alpha-oléfines et éventuellement d'un ou plusieurs comonomères alpha-oléfines dans ledit deuxième réacteur en phase gazeuse (GPR2) pour obtenir ledit deuxième flux de produit alpha-oléfine (4b).

5. Procédé selon l'une quelconque des revendications précédentes, dans lequel la concentration de solides dans le troisième flux de produit (6) est inférieure à la concentration de solides dans le premier flux de produit (2) comprenant ladite suspension concentrée.

6. Procédé selon l'une quelconque des revendications précédentes, dans lequel l'étape (c) est réalisée dans un hydrocyclone.

7. Procédé selon la revendication 6, dans lequel la suspension de polymère (1) est concentrée pour fournir un flux inférieur, qui comprend la suspension concentrée (2), et un flux supérieur (3), qui est riche en hydrocarbure(s).

8. Procédé selon la revendication 7, dans lequel le flux supérieur (3) est recyclé dans le réacteur à suspension.

9. Procédé selon l'une quelconque des revendications précédentes, dans lequel le premier flux de produit alpha-oléfine (4a) obtenu à l'étape (d) de la revendication 1 ou à l'étape (e') de la revendication 3 et le deuxième flux de produit alpha-oléfine (4b) obtenu à l'étape (e) de la revendication 1 ou à l'étape (f) de la revendication 3 sont combinés pour former un flux de produit alpha-oléfine joint (5).

10. Procédé selon l'une quelconque des revendications précédentes, dans lequel ledit premier flux de produit (2) comprenant la suspension concentrée est prélevé du réacteur à suspension, la concentration de solides à la sortie étant supérieure à la concentration de solides dans le réacteur à suspension.

11. Procédé selon l'une quelconque des revendications 3 à 10, dans lequel la concentration de solides dans le premier flux de produit secondaire (2a) est supérieure à la concentration de solides dans le deuxième flux de produit secondaire (2b).

12. Procédé selon l'une quelconque des revendications précédentes, dans lequel après l'étape (c) de la revendication 1, ledit premier flux de produit (2) comprenant ladite suspension concentrée est transféré vers une unité de détente instantanée afin d'éliminer essentiellement toute la phase fluide restante et de fournir un flux de produit modifié contenant une suspension de solides polymères et de gaz, et ledit flux de produit modifié est polymérisé dans ledit premier réacteur en phase gazeuse (GPR1).

13. Système de polymérisation pour la production de polymères d'alpha-oléfines en présence d'un catalyseur de polymérisation dans une séquence de polymérisation multi-étapes fonctionnant en continu, comprenant :
(A) un réacteur à suspension pour polymériser un monomère alpha-oléfine et éventuellement un ou plusieurs co-monomères alpha-oléfine en présence d'un diluant hydrocarboné ou d'un monomère liquide dans une phase de suspension pour obtenir un polymère d'alpha-oléfine, la phase de suspension ayant une première concentration de solides, le réacteur à suspension ayant au moins une sortie permettant le prélèvement continu d'une suspension de polymère,
(B) une cuve de séparation pour concentrer au moins une partie de la suspension de polymère prélevée du réacteur à suspension en éliminant une partie de la phase fluide pour fournir un premier flux de produit (2) comprenant une suspension concentrée ayant une deuxième concentration de solides, qui est supérieure à la première concentration de solides, et un deuxième flux de produit (3) comprenant principalement la phase fluide, la cuve de séparation ayant un flux supérieur et un flux inférieur,
(C) un premier réacteur en phase gazeuse (GPR1) agencé en aval du réacteur à suspension pour polymériser le premier flux de produit (2) en présence de monomères alpha-oléfines et éventuellement d'un ou plusieurs co-monomères alpha-oléfines, pour obtenir ainsi un premier flux de produit alpha-oléfine (4a) sortant dudit premier réacteur en phase gazeuse (GPR1), et
(D) un deuxième réacteur en phase gazeuse (GPR2) agencé en aval du réacteur à suspension et agencé parallèlement au premier réacteur en phase gazeuse (GPR1) pour polymériser un troisième flux de produit (6), retiré du réacteur à suspension en présence de monomères alpha-oléfines et éventuellement d'un ou plusieurs co-monomères alpha-oléfines, pour obtenir ainsi un deuxième flux de produit alpha-oléfine (4b) sortant dudit deuxième réacteur en phase gazeuse (GPR2).

14. Système de polymérisation selon la revendication 13, dans lequel ledit troisième flux de produit (6) comprend une suspension concentrée ayant une concentration de solides inférieure à la deuxième concentration de solides dudit premier flux de produit (2).

15. Système de polymérisation pour la production de polymères d'alpha-oléfines en présence d'un catalyseur de polymérisation dans une séquence de polymérisation multi-étapes fonctionnant en continu, comprenant :
(A) un réacteur à suspension pour polymériser un monomère alpha-oléfine et éventuellement un ou plusieurs co-monomères alpha-oléfine en présence d'un diluant hydrocarboné ou d'un monomère liquide dans une phase de suspension pour obtenir un polymère d'alpha-oléfine, la phase de suspension ayant une première concentration de solides, le réacteur à suspension ayant au moins une sortie permettant le prélèvement continu d'une suspension de polymère,
(B) une cuve de séparation pour concentrer au moins une partie de la suspension de polymère prélevée du réacteur à suspension en éliminant une partie de la phase fluide pour fournir un premier flux de produit (2) comprenant une suspension concentrée ayant une deuxième concentration de solides, qui est supérieure à la première concentration de solides, et un deuxième flux de produit (3) comprenant principalement la phase fluide, la cuve de séparation ayant un flux supérieur et un flux inférieur, et
(G) des conduites de transfert respectives pour diviser le premier flux de produit (2) prélevé du réacteur à suspension en un premier flux de produit secondaire (2a) et un deuxième flux de produit secondaire (2b), le premier flux de produit (2) comprenant ladite suspension concentrée,
ledit premier flux de produit secondaire (2a) étant polymérisé en présence de monomères alpha-oléfines et éventuellement d'un ou plusieurs comonomères alpha-oléfines dans un premier réacteur en phase gazeuse (GPR1), agencé en aval dudit réacteur à suspension, afin d'obtenir un premier flux de produit alpha-oléfine (4a), et
ledit deuxième flux de produit secondaire (2b) étant polymérisé en présence de monomères alpha-oléfines et éventuellement d'un ou plusieurs co-monomères alpha-oléfines dans un deuxième réacteur en phase gazeuse (GPR2) agencé en aval dudit réacteur à suspension, et agencé parallèlement au premier réacteur en phase gazeuse (GPR1) pour obtenir un deuxième flux de produit alpha-oléfine (4b).

16. Système de polymérisation selon la revendication 15, comprenant en outre :
(D') une ligne de transfert pour prélever du réacteur à suspension un troisième flux de produit (6) et le transférer vers ledit deuxième réacteur en phase gazeuse (GPR2), pour polymériser ledit troisième flux de produit (6) en présence de monomères alpha-oléfines et éventuellement d'un ou plusieurs co-monomères alpha-oléfines, pour obtenir ainsi ledit deuxième flux de produit alpha-oléfine (4b) sortant dudit deuxième réacteur en phase gazeuse (GPR2).

17. Système de polymérisation selon la revendication 15 ou 16, dans lequel la concentration de solides dans le troisième flux de produit (6) est inférieure à la concentration de solides dans le premier flux de produit (2) comprenant ladite suspension concentrée.

18. Système de polymérisation selon l'une quelconque des revendications 13 à 17, dans lequel ladite cuve de séparation est un hydrocyclone.

19. Système de polymérisation selon l'une quelconque des revendications 13 à 18, comprenant en outre
(H) des lignes de transfert respectives combinant ledit premier flux de produit alpha-oléfine (4a) sortant dudit premier réacteur en phase gazeuse (GPR1) et ledit deuxième flux de produit alpha-oléfine (4b) sortant dudit deuxième réacteur en phase gazeuse (GPR2) pour former un flux de produit alpha-oléfine réunis (5).

20. Système de polymérisation selon l'une quelconque des revendications 13 à 19, comprenant en outre
(I) une unité de détente instantanée située en aval du réacteur à suspension et en amont de l'un ou des deux desdits premier et deuxième réacteurs en phase gazeuse pour éliminer du premier flux de produit (2) et/ou du troisième flux de produit (6) essentiellement la totalité de la phase fluide restante et pour fournir un flux de produit modifié contenant une suspension de solides polymères et de gaz qui est transféré à l'un au moins desdits premier et deuxième réacteurs en phase gazeuse.
